(19) **Europäisches Patentamt**

**European Patent Office**

**Office européen des brevets**

(11) Veröffentlichungsnummer: **0 253 101 B1**

(12) **EUROPÄISCHE PATENTSCHRIFT**

(45) Veröffentlichungstag der Patentschrift: **03.03.93**

(21) Anmeldenummer: **87107328.4**

(22) Anmeldetag: **20.05.87**

Die Akte enthält technische Angaben, die nach dem Eingang der Anmeldung eingereicht wurden und die nicht in dieser Patentschrift enthalten sind.

(51) Int. Cl.⁵: **C08G 59/50**, C09D 163/00, C09D 5/00

(54) **Pulverlacke, deren Herstellung und Verwendung.**

(30) Priorität: **17.07.86 DE 3624177**

(43) Veröffentlichungstag der Anmeldung:
**20.01.88 Patentblatt 88/03**

(45) Bekanntmachung des Hinweises auf die Patenterteilung:
**03.03.93 Patentblatt 93/09**

(84) Benannte Vertragsstaaten:
**BE CH DE FR GB IT LI NL SE**

(56) Entgegenhaltungen:
**EP-A- 0 198 226**
**WO-A-83/00045**
**FR-A- 2 105 161**
**US-A- 3 272 763**

(73) Patentinhaber: **HÜLS AKTIENGESELLSCHAFT**
**Patentabteilung / PB 15 - Postfach 13 20**
**W-4370 Marl 1(DE)**

(72) Erfinder: **Weiss, Jörn-Volker, Dr.**
**Im Hadkamp 1**
**W-4358 Haltern3(DE)**

**Beschreibung**

Gegenstand der Erfindung sind Pulverlacke auf der Grundlage eines Stoffgemisches aus Epoxidverbindungen und gegebenenfalls Polyestern und Salzen von anorganischen Säuren mit primären Diaminen als Härter.

In der Industrie besteht ein großer Bedarf an Pulverlacken aller Art. Dies liegt vor allem daran, daß man beim Einsatz auf Lösemittel verzichten kann, und nur sehr geringe Verluste bei der Anwendung auftreten. Pulverlacke sind sparsam und umweltschonend.

Die meisten bekannten Lacke ergeben glänzende Oberflächen. In jüngster Zeit ist man vor allem an matten Oberflächen interessiert, da diese ein weitaus geringeres Maß an Reinigung als glänzende Flächen erfordern. Auch aus sicherheitstechnischen Überlegungen ist es vielfach günstiger, matte Oberflächen zu erzeugen.

Das einfachste Prinzip, eine matte Oberfläche zu erhalten, besteht darin, dem Pulverlack je nach Ausmaß des gewünschten Matteffekts kleinere oder größere Mengen Füllstoffe, wie z. B. Kreide, feinverteiltes Siliciumdioxid, Bariumsulfat, oder unverträgliche Zusatzstoffe, wie Wachse, Cellulosederivate, beizumischen. Diese Zusätze bewirken jedoch eine Verschlechterung der lacktechnischen Filmeigenschaften.

In der DE-PS 23 24 696 wird ein Verfahren zur Herstellung von Überzügen mit matter Oberfläche vorgestellt, bei dem ein Spezialharter - das Salz von cyclischen Amidinen mit bestimmten Polycarbonsäuren - zum Einsatz kommt. Tatsächlich hat sich aufgrund seiner hervorragenden lacktechnischen Eigenschaften nur dieses Verfahren auf dem Markt durchsetzen können; das Verfahren wurde inzwischen mehrfach verbessert (vgl. DE-OSS 30 26 455, 30 26 456 und deutsche Patentanmeldung P 35 11 998.5 vom 02.04.1985 "Härter für pulverförmige Überzugsmittel auf der Basis von Epoxiharzen").

Dennoch weist dieses Verfahren einige grundsätzliche Nachteile auf. Die erforderlichen Amidine sind teuer und nicht immer in den notwendigen Mengen verfügbar. Es wäre wünschenswert, könnte man leichter zugängliche basische Verbindungen, etwa direkt flüssige Diamine, in geeigneter Form als Härter für Epoxidharze einsetzen. Die Salze dieser Amine mit den üblichen Säuren sind jedoch im Gegensatz zu den Amidinsalzen so beständig, daß unter den in der Pulverlackindustrie üblichen Einbrennbedingungen keine hinreichende Härtung der Epoxidharze stattfindet.

Ein wäßriges Beschichtungssystem, das durch Umsetzung eines Polyol-Polyether-Epoxids mit Phosphorsäureanhydrid erhältlich ist, wird in der EP-PS 0 082 196 beschrieben. Ein solches wäßriges System gibt dem Fachmann, der Pulverlacke herstellen möchte, keine Anregungen bei der Suche nach Lacksystemen, die einen Matteffekt erzeugen.

In der FR-A-2 105 161 wird die Härtung von Epoxidverbindungen mit Salzen von aliphatischen und cycloaliphatischen Polyaminen mit Säuren, wie z.B. Schwefelsäure, beschrieben.

Ziel der vorliegenden Erfindung war es, lagerstabile Pulverlacke aufzufinden, die folgenden Anforderungen gerecht werden sollten:

1. Die Härter sollten sowohl für Epoxidharze als auch für die sogenannten Hybridsysteme d. h. Mischsysteme von Epoxid- und Polyesterharzen anwendbar sein.

2. Als Härter sollten Substanzen eingesetzt werden, die leicht zugänglich und herstellbar und in praktisch beliebigen Mengen verfügbar sind.

3. Die Aushärtung ergibt matte Oberflächen.

Es wurden jetzt Pulverlacke gefunden, die diesen Anforderungen gerecht werden. Sie weisen eine Korngröße von weniger als 100 $\mu$m auf und stellen ein Stoffgemisch folgender Komponenten dar:

- Epoxidverbindung mit im Durchschnitt mehr als einer Epoxidgruppe pro Molekül und einem Schmelzpunkt über 70 °C,
- gegebenenfalls bis zu 45 % Polyester, bezogen auf das Gewicht der Epoxidverbindungen,
- Salze von Phosphor- und/oder Schwefelsäure mit primären (cyclo)aliphatischen $C_{4-18}$-Diaminen,
- 1,5-Diazabicyclo-[2.2.2.]-octan
- sowie gegebenenfalls übliche Zusätze.

Gegenstand der vorliegenden Erfindung ist ferner ein Verfahren zur Herstellung von matten Überzügen gemäß Anspruch 4.

Der Vorteil der erfindungsgemäßen Pulverlacke liegt vor allem darin, daß man nicht auf spezielle Diamine und Addukte angewiesen ist, die gegebenenfalls erst synthetisiert werden müssen, sondern daß man überaus gebräuchliche Verbindungen einsetzen kann, die kommerziell verfügbar sind.

Die einsetzbaren Epoxidharze weisen durchschnittlich mehr als eine Epoxidgruppe pro Molekül auf. Sie haben einen Schmelzpunkt über 70 °C. Die Epoxidharze können sowohl gesättigt als auch ungesättigt, aliphatisch, cycloaliphatisch, araliphatisch oder heterocyclisch sein. Im einzelnen handelt es sich um

- Epoxide mehrfach ungesättigter Kohlenwasserstoffe, wie z. B. Vinylcyclohexen, Dicyclopentadien, Cyclohexadien-(1,3) und -(1,4), Cyclododecadiene und -triene, Isopren, Hexadien-(1,5), Butadien, Polybutadiene, Divinylbenzole und dergleichen,
- Epoxyether mehrwertiger Alkohole, wie z. B. Ethylen-, Propylen- und Butylenglykol, Glycerin, Pentaerythrit, Sorbit, Polyvinylalkohole und Thiodiglykole,
- Epoxyether mehrwertiger Phenole, wie Resorcin, Hydrochinon, Bis(4-hydroxyphenol)-methan, Bis-(4-hydroxy-3,5-dichlorphenyl)-methan, 1,1-Bis-(4-hydroxyphenyl)-ethan, 2,2-Bis-(4-hydroxyphenyl)-propan, 2,2-Bis-(4-hydroxy-3-methylphenyl)-propan, 2,2-Bis-(4-hydroxy-3,5,5-trichlorphenyl)-propan, Bis-(4-hydroxyphenyl)-phenylmethan, Bis-(4-hydroxyphenyl)-diphenylmethan,Bis-(4-hydroxyphenyl)-cyclohexylmethan, 4,4′-Dihydroxydiphenyl, 2,2′-Dihydroxydiphenyl,
- N-haltige Epoxide, wie N,N-Diglycidylanilin, N,N′-Dimethyldiglycidyl-4,4′-diaminodiphenylmethan, Triglycidylisocyanurat.

Als besonders geeignet haben sich Epoxide auf Bisphenol A-Basis mit einem Epoxid-Äquivalent von 500 bis 2 000 und einem Schmelzpunkt von 70 bis 140 ° C erwiesen.

Geeignete Polyester, die in Mengen bis zu 45 %, bezogen auf das Gewicht der Epoxidverbindungen, zugesetzt werden können, umfassen Oligoester (cyclo)aliphatischer oder aromatischer Polycarbonsäuren mit (cyclo)aliphatischen Diolen, wobei beide Komponenten 4 bis 18 C-Atome aufweisen.

Zur Herstellung der Oligoester werden aliphatische, cycloaliphatische oder aromatische Di- oder Polycarbonsäuren einerseits und aliphatische oder cycloaliphatische Diole andererseits eingesetzt. Die Carbonsäuren bzw. Diole enthalten 4 bis 18 C-Atome. Im Falle der Diole können einzelne Kohlenstoffatome gegebenenfalls auch durch Sauerstoffatome ersetzt sein. Bedingung hierfür ist, daß ein solches Sauerstoffatom durch mindestens 2 Kohlenstoffatome von der Hydroxylgruppe und/oder von einem weiteren Sauerstoffatom in der Kette getrennt ist.

Als Dicarbonsäuren kommen z. B. Bernsteinsäure, Glutarsäure, Adipinsäure, Trimethyladipinsäure, Azelainsäure, Sebazinsäure, Decandisäure, Dodecandisäure, Fumarsäure, Maleinsäure und Isophthalsäure infrage. Als Polycarbonsäure werden z. B. Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4′-dicarbonsäure, Butantetracarbonsäure, Cyclopentatetracarbonsäure, Pyromellithsäure, Benzol-1,2,3,4-tetracarbonsäure,Benzol-1,2,3,5-tetracarbonsäure, und 3,4-Dicarboxy-1,2,3,4-tetrahydronaphthalin-1-bernsteinsäure eingesetzt.

Als Diole kommen z. B. 1,3-, 1,4- oder 2,3-Butandiol, 1,5-Pentandiol, 2,2-Dimethyl-1,3-propandiol, 1,6- und 2,5-Hexandiol sowie 1,12-Dodecandiol infrage.

Die carboxylgruppenhaltigen Oligoester besitzen eine Säurezahl von 245 bis 265, insbesondere 250 bis 260. Die Erweichungspunkte liegen im allgemeinen im Bereich von 40 bis 110 ° C, vorzugsweise im Bereich von 60 bis 90 ° C. Typischerweise liegt ihre mittlere Molmasse unterhalb von 2 500.

Die Herstellung der Oligoester ist bekannt (Sorensen u. Campbell -"Preparative Methods of Polymer Chemistry", Interscience Publishers Inc., New York, 1961, S. 111 - 127). Im allgemeinen erfolgt die Herstellung bei Temperaturen bis 200 ° C durch Kondensation in der Schmelze. Der Reaktionsverlauf kann dabei durch Titration der überschüssigen Carboxylgruppen verfolgt werden, so daß das Ende der Reaktion leicht bestimmt werden kann.

Als anorganische Säuren verwendet man Phosphorsäure.

Die primären Diamine weisen eine aliphatische oder cycloaliphatische Struktur mit 4 bis 18 C-Atomen auf. Besonders geeignet sind

- Derivate des Cyclohexylamins, die eine weitere aliphatisch oder cycloaliphatisch gebundene Aminogruppe enthalten, insbesondere Isophorondiamin (IPD).
- aliphatische Diamine von der Struktur des Hexamethylendiamins, die gegebenenfalls durch mehrere niedere Alkylgruppen substituiert sein können, insbesondere 2,2,4- und/oder 2,4,4-Trimethylhexamethylendiamin (TMD).

Die Herstellung der Salze erfolgt zweckmäßigerweise durch Umsetzung der anorganischen Säuren mit den aufgeführten Diaminen in wäßriger Lösung bei einer Temperatur von etwa 50 ° C. Die Menge der Säure wird so eingestellt, daß auf eine Aminogruppe mindestens eine, vorzugsweise höchstens zwei Säuregruppen, kommen.

Die erfindungsgemäßen Pulverlacke enthalten ferner 1,5-Diazabicyclo-[2.2.2.]-octan, vorzugsweise in einer Menge von 0,5 bis 1 %, bezogen auf das Gesamtgewicht der Formulierung.

Bei der Herstellung der pulverförmigen Überzugsmittel können weiterhin übliche Zusätze, wie Verlaufmittel, Pigmente, Farbstoffe, Füllstoffe, Katalysatoren, Thixotropiermittel, UV- und Oxidationsstabilisatoren, Verwendung finden. Die Menge dieser Zusätze kann, bezogen auf die Menge des Bindemittels, innerhalb eines weiten Bereichs schwanken.

Die Herstellung der Überzugsmittel erfolgt beispielsweise in der Weise, daß man die einzelnen Komponenten (Epoxidharze, Härter und gegebenenfalls Zusätze) mahlt, mischt und bei 90 bis 110 °C extrudiert. Nach dem Extrudieren wird abgekühlt und auf eine Korngröße kleiner als 100 μm gemahlen.

Die Applikation auf die zu überziehenden Substrate kann nach bekannten Methoden erfolgen, z. B. durch elektrostatisches Pulversprühen, Wirbelsintern oder elektrostatisches Wirbelsintern. Anschließend wird das aufgetragene Überzugsmittel 5 bis 35 Minuten im Temperaturbereich zwischen 160 bis 240 °C, vorzugsweise 10 bis 20 Minuten, zwischen 180 bis 220 °C ausgehärtet.

Zur Beschichtung mit den erfindungsgemäßen pulverförmigen Überzugsmitteln eigenen sich alle Substrate, die bei den angegebenen Härtungstemperaturen beständig sind, z. B. Metalle, Glas, Keramik oder Kunststoff.

Die mit Hilfe der erfindungsgemäßen Härter hergestellten Überzüge weisen eine gleichmäßige Struktur und einen matten Glanz auf. Gemäß der Bestimmungsmethode nach Gardner (60°) können Glanzgrade bis 14 erreicht werden. In unerwarteter Weise bleiben andere lacktechnische Eigenschaften auf hohem Niveau.

Die lacktechnischen Eigenschaften wurden mit Hilfe der nachstehenden Prüfmethoden bestimmt:

Tiefung nach Erichsen in mm (DIN 53 156)

Kugelschlagprüfung nach Gardner (ASTM D 2794)

Gitterschnittprüfung (DIN 53 151)

Glanzgrad nach Gardner bei 60° (ASTM D 523)

Beispiele

Die Herstellung von 200 g Härter erfolgt in einem 1-l-Dreihalskolben, ausgerüstet mit einem mechanischen Rührer, einem Kühler, einem Pulvertrichter und einem Heizpilz.

Die wasserlöslichen Polyamine (z. B. IPD, TMD) werden in 400 ml voll entsalztem Wasser (VE-Wasser) vorgelegt. Unter Rühren werden dann die Säuren zugetropft. Anschließend wird das Reaktionsgemisch 1 Stunde bei 50 °C gerührt.

Die Isolierung des entstandenen Salzes erfolgt durch Abziehen des Lösemittels am Rotationsverdampfer und anschließende fünfstündige Trocknung des festen Rückstandes unter Vakuum bei 100 °C.

Herstellung der Pulverlacke

Die als Härter verwendeten Salze werden zunächst mit Hilfe einer Rotor-Schnellmühle zu einem sehr feinen Pulver vermahlen. Anschließend wird dieses Pulver mit den übrigen Pulverlackkomponenten (Epoxidharz und gegebenenfalls Polyester, Titandioxid, 1,4-Diazabicyclo-[2.2.2.]-octan, Verlaufmittel in Form eines 10 %igen Masterbatches, etc.) in einem Vormischer grob gemischt und in einem Buss-Kokneter bei 100 °C extrudiert. Das abgekühlte Extrudat wird zu einem feinen Pulver vermahlen, wobei die Grobanteile über 100 μm durch ein Sieb abgetrennt werden. Das so erhaltene Pulver wird in einer elektrostatischen Pulverspritzanlage bei einer Spannung von 60 KV auf Stahlbleche appliziert und in einem Umlufttrockenschrank bei Temperaturen zwischen 180 und 220 °C eingebrannt.

## Eingesetzte Härtersalze

| Nr. | Polyamin/anorganische Säure | Molverhältnis |
|---|---|---|
| 1 | TMD/$H_3PO_4$ | 1 : 1 |
| 2 | TMD/$H_3PO_4$ | 2 : 3 |
| 3 * | TMD/$H_3PO_4$ | 3,5 : 1,7 |
| 4 | IPD/$H_3PO_4$ | 1 : 1 |
| 5 | IPD/$H_3PO_4$ | 2 : 3 |
| 6 | IPD/$H_3PO_4$ | 3 : 2 |
| 7 | IPD/$H_3PO_4$ | 3 : 2,1 |
| 8 | TMD/IPD/$H_3PO_4$ | 0,5 : 1,5 : 2,55 |
| 9 * | TMD/IPD/$H_3PO_4$ | 1,5 : 1,5 : 1,7 |
| 10 * | IPD/$H_2SO_4$ | 1,5 : 1 |

\* zu Vergleichszwecken eingesetzt

Für die Herstellung der Pulverlacke werden folgende Epoxidharze und folgender OH-gruppenhaltiger Polyester eingesetzt:

| Epoxidharz 1 (EP 1) | |
|---|---|
| EP-Äquivalentgewicht<br>EP-Wert<br>Erweichungsbereich | 850 - 940<br>0,10 - 0,11<br>80 - 100 °C |
| Epoxidharz 2 (EP 2) | |
| EP-Äquivalentgewicht<br>EP-Wert<br>Erweichungsbereich | 730 - 840<br>0,12 - 0,13<br>94 - 106 |
| Polyesterharz 1 (PE 1) | |
| Säurezahl<br>Glasumwandlungstemperatur | 47 - 57<br>58 °C |

Bei dem Epoxidharz 1 handelt es sich um ein Produkt der Fa. Shell AG, Hamburg, das unter dem Namen Epikote[R] 1004 im Handel erhältlich ist. Epoxidharz 2 ist ein Produkt der Fa. Dow Chemical Co., mit der Bezeichnung DER[R] 663.

Das Polyesterharz 1 ist ein Produkt der Fa. DSM Resins, Zwolle, Niederlande, mit der Bezeichnung URALAC[R] 2228.

5

Zusammensetzung der Pulverlacke

(Angaben in Mengenteilen)

| Beispiel | 1 | 2 | 3* | 4 | 5 | 6 | 7 | 8 | 9* | 10* | 11 | 12 | A* | B* | C* |
|---|---|---|---|---|---|---|---|---|---|---|---|---|---|---|---|
| Härter Nr. | 1 | 2 | 3 | 4 | 5 | 6 | 7 | 8 | 9 | 10 | 4 | 1 | 1 | 1 | 6 |
| Härter | 3 | 3 | 3 | 3 | 3 | 3 | 3 | 5 | 3 | 3 | 3 | 3 | 3 | 5 | 5 |
| Harz EP 1 | 56 | 56 | 56 | 56 | 56 | 56 | 56 | 54 | 56 | 56 | - | - | 56 | 54 | 54 |
| Harz EP 2 | - | - | - | - | - | - | - | - | - | - | 40,8 | 40,8 | - | - | - |
| Harz PE 1 | - | - | - | - | - | - | - | - | - | - | 15,2 | 15,2 | - | - | - |
| $TiO_2$ | 40 | 40 | 40 | 40 | 40 | 40 | 40 | 40 | 40 | 40 | 40 | 40 | 40 | 40 | 40 |
| Verlaufmittel | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 |
| 1,4-Diaza-bicyclo-[2.2.2]-octan | 0,5 | 0,5 | 0,5 | 0,5 | 0,5 | 0,5 | 0,5 | 0,5 | 0,5 | 0,5 | 0,5 | 0,5 | 0 | 0 | 0 |

* Vergleichsbeispiele

EP 0 253 101 B1

## Patentansprüche

1. Lagerstabile Pulverlacke für matte Überzüge mit einer Korngröße kleiner als 100 μm, auf der Grundlage eines Stoffgemisches aus

   - Epoxidverbindungen mit im Durchschnitt mehr als einer Epoxidgruppe pro Molekül und einem Schmelzpunkt über 70 °C

   - Salzen von primären aliphatischen und cycloaliphatischen Diaminen mit 4-18 C-Atomen

## Härtungsbedingungen und mechanische Kenndaten der Lacke

| Beispiel | 1 | 2 | 3* | 4 | 5 | 6 | 7 | 8 | 9* | 10* | 11 | 12 | A* | B* | C* |
|---|---|---|---|---|---|---|---|---|---|---|---|---|---|---|---|
| Härtungsbe-dingungen | | | | | | | | | | | | | | | |
| Zeit (Minuten) | 15 | 15 | 15 | 15 | 15 | 15 | 15 | 10 | 15 | 15 | 10 | 15 | 15 | 25 | 15 |
| Temperatur (°C) | 200 | 200 | 200 | 200 | 200 | 200 | 200 | 200 | 200 | 200 | 200 | 200 | 200 | 180 | 200 |
| mechanische Kenndaten | | | | | | | | | | | | | | | |
| Schichtdicke | 45 | 50 | 60 | 65 | 50 | 50 | 50 | 60 | 55 | 60 | 55 | 60 | 50 | 50 | 55 |
| Dornbiegetest | <2 | <2 | 3 | 2 | 4 | <2 | 3 | 5 | <2 | <2 | 2 | 2 | <32 | 20 | 20 |
| Erichsentiefung | 9,1 | 9 | 7,5 | 4,5 | 3,5 | 5,9 | 7,6 | 4,4 | 8,1 | 8,5 | 9,0 | 7,0 | 0,3 | 0,8 | 0,6 |
| Kugelschlag | | | | | | | | | | | | | | | |
| direkt | >80 | >80 | >80 | 80 | 50 | >80 | >80 | 80 | >80 | 80 | >80 | >80 | 20 | 40 | 40 |
| reverse | 20 | 20 | >80 | <10 | <10 | 20 | 20 | >10 | 20 | <10 | 20 | 10 | <10 | <10 | <10 |
| Glanz 60° | 25 | 25 | 52 | 18 | 14 | 36 | 40 | 17 | 30 | 42 | 25 | 40 | 30 | 37 | 40 |

* Vergleichsbeispiel

- gegebenenfalls bis zu 45 % Polyester, bezogen auf das Gewicht der Epoxidverbindung
- sowie gegebenenfalls üblichen Zusätzen,

dadurch gekennzeichnet,

daß man zur Salzbildung als Säure Phosphorsäure verwendet und zusätzlich 1,4-Diazabicyclo-[2.2.2]-octan einsetzt.

2. Pulverlacke gemäß Anspruch 1,
dadurch gekennzeichnet,
daß man als Diamin Derivate des Cyclohexylamins einsetzt.

3. Pulverlacke gemäß Anspruch 1,
dadurch gekennzeichnet,
daß man als Diamine gegebenenfalls alkylsubstituierte Hexamethylendiamine einsetzt.

4. Verfahren zur Herstellung von matten Überzügen,
dadurch gekennzeichnet,
daß man mindestens 1 Äquivalent Säure mit 1 Äquivalent Amin eines Diamins nach den Ansprüchen 1 bis 3 umsetzt, und das erhaltene Salz mit den Epoxidharzen und gegebenenfalls sonstigen üblichen Zusätzen in Gegenwart von 1,4-Diazabicyclo-[2.2.2]-octan bei einer Temperatur von 160 bis 240 °C innerhalb von 5 bis 35 Minuten zu einem duroplastischen Lack aushärtet.

**Claims**

1. Storage-stable lacquer powders for matt coatings having a grain size smaller than 100 $\mu$m and based on an ingredient mixture consisting of:
   - epoxide compounds containing on average more than one epoxide group per molecule and having a melting point above 70°C
   - salts of primary aliphatic and cycloaliphatic diamines containing 4-18 C atoms
   - optionally up to 45% polyester based on the weight of epoxide compound
   - and other additives customarily employed
   characterized in that phosphoric acid is the acid employed for salt formation and, in addition, 1,4-diazabicyclo-[2.2.2]-octane is added.

2. Lacquer powders as claimed in claim 1, characterized in that derivatives of cyclohexylamine are employed as diamines.

3. Lacquer powders as claimed in claim 1, characterized in that optionally alkyl-substituted hexamethylenediamines are employed as diamines.

4. A method for the production of matt coatings, characterized in that at least 1 equivalent of acid is reacted with 1 equivalent of amine in accordance with claims 1 to 3 and the salt obtained together with the epoxy resins and optionally other conventionally employed additives is cured in the presence of 1 4-diazabicyclo-[2.2.2]-octane at a temperature of 160 to 240°C for 5 to 35 minutes to form a duroplastic lacquer.

**Revendications**

1. Laques en poudre stables au stockage pour des recouvrements mats ayant une taille de grains plus petite que 100 $\mu$m, à base d'un mélange de substances formé :
   - des composés époxydiques renfermant en moyenne plus d'un groupe époxy par molécule et ayant un point de fusion au dessus de 70°C,
   - des sels de diamines primaires aliphatiques et cycloaliphatiques ayant de 4 à 18 atomes de Carbone,
   - le cas échéant jusqu'à 45 % de polyester rapporté au poids de composé époxydique,

   caractérisées en ce que l'on utilise pour la salification en tant qu'acide, l'acide phosphorique et en plus on met en oeuvre du 1,4-diazabicyclo-[2.2.2]-octane ainsi que des additifs usuels.

**2.** Laques en poudre selon la revendication 1, caractérisées en ce que l'on met en oeuvre en tant que diamine, des dérivés de la Cyclohexylamine.

**3.** Laques en poudre selon la revendication 1, caractérisées en ce que l'on met en oeuvre en tant que diamine, des hexaméthylène diamines éventuellement substituées par un alcoyle.

**4.** Procédé de production de recouvrements mats, caractérisé en ce que l'on fait réagir au moins un équivalent d'acide avec un équivalent d'amine d'une diamine selon les revendications 1 à 3, et que l'on durcit le sel obtenu avec les résines époxydiques et le cas échéant des additifs usuels divers en présence de 1,4-diazabicyclo-[2.2.2]-octane à une température de 160 à 240°C en l'espace de 5 à 35 minutes, en une laque duroplastique.